# EUROPÄISCHE PATENTSCHRIFT

(11) **EP 1 126 645 B1**
(45) Veröffentlichungstag und Bekanntmachung des Hinweises auf die Patenterteilung: **09.07.2008**
(21) Anmeldenummer: 01200492.5
(22) Anmeldetag: 09.02.2001
(51) Int. Cl.: H04J 3/06

(54) **Kommunikationsnetzwerk mit zeitgesteuertem Kommunikationsprotokoll**
Communication network with time controlled communication protocole
Réseau de communication à protocole de communication commandé en temps

(30) Priorität: 16.02.2000 DE 10007070
(43) Veröffentlichungstag der Anmeldung: 22.08.2001
(73) Patentinhaber: NXP B.V., 5656 AG Eindhoven (NL)
(72) Erfinder: Fuhrmann, Peter, Habsburgerallee 11, Aachen (DE); Budde, Wolfgang, Habsburgerallee 11, Aachen (DE); Mores, Robert, Habsburgerallee 11, Aachen (DE)
(74) Vertreter: Meyer, Michael Josef

(56) Entgegenhaltungen:
- POLEDNA S ET AL: "TTP: DRIVE BY WIRE IN GREIFBARER NAEHE ECHTZEIT-KOMMUNIKATION IM AUTOMOBIL MIT ZEITGESTEUERTEM PROTOKOLL ERLAUBT HOCHZUVERLAESSIGE ANWENDUNGEN" ELEKTRONIK, WEKA FACHZEITSCR.-VERLAG, MUNCHEN, DE, Bd. 48, Nr. 14, 13. Juli 1999 (1999-07-13), Seite 36-38,40,42,43, XP000913186 ISSN: 0013-5658
- KOPETZ H ET AL: "A Synchronization Strategy for Time-Triggered Multicluster Real-Time System" RELIABLE DISTRIBUTED SYSTEMS. BAD NEUENAHR, SEPT. 13 - 15, 1995, NEW YORK, IEEE, US, 13. September 1995 (1995-09-13), Seiten 154-161, XP002293492

## Beschreibung

Die Erfindung bezieht sich auf ein Kommunikationsnetzwerk
- mit mehreren Netzwerkknoten (2), die jeweils mit einer Synchronisationsschaltung (5) zur Erzeugung eines globalen Taktsignals aus einem von einem in dem Netzwerkknoten vorgesehenen Taktgenerator (4) gebildeten lokalen Taktsignals LT in Abhängigkeit von einem Empfangszeitpunkt einer Nachricht,
- mit einer in jeder Synchronisationsschaltung (5) vorgesehenen Teileranordnung (8) zur Teilung des lokalen Taktsignals LT in Abhängigkeit von mindestens einem Teilerfaktor, den eine in der Synchronisationsschaltung (5) vorgesehene Vorteileranordnung (9) liefert, und einem Korrekturterm KT, und
- mit einer in jeder Synchronisationsschaltung (5) vorgesehenen Vergleichsschaltung (10) zur Bildung des Korrekturterms KT durch Vergleich des Empfangszeitpunkts einer Nachricht und des lokalen Taktsignals LT.

In einem solchen Kommunikationsnetzwerk für die Kraftfahrzeugtechnik kann z.B. das aus der Zeitschrift "Elektronik", Nr. 14, 1999, Seite 36 bis 43 (Dr. Stefan Polenda, Georg Kroiss: "TTP: "Drive by Wire" in greifbarer Nähe") bekannte TTP-Protokoll (TTP = Time-Triggered Protocol) verwendet werden. Dieses Protokoll stellt einen Korrekturterm für die Durchführung der Synchronisation zur Verfügung, der sich aus dem Vergleich des theoretischen Zeitpunktes, zu dem eine bestimmte Nachricht eintreffen soll, mit dem tatsächlichen Empfangszeitpunkt ergibt. Falls dieser Korrekturterm durch eine schleichende, kontinuierliche Abweichung (z.B. durch Alterung der Taktquelle) verursacht wird, muss er immer wieder in jedem Synchronisationsintervall ausgeglichen werden.

Der Erfindung liegt die Aufgabe zugrunde, ein Kommunikationsnetzwerk mit dynamischer Synchronisation zu schaffen.

Die Aufgabe wird durch ein Kommunikationsnetzwerk der eingangs genannten Art dadurch gelöst, dass die Synchronisationsschaltungen (5) jeweils eine Teilersteuerung (7) enthalten, die zur Veränderung des Teilerfaktors oder wenigstens eines der Teilerfaktoren bei Überschreiten des Korrekturterms KT über einen vorgegebenen ersten Schwellwert vorgesehen ist.

Die dieser Erfindung zugrundeliegende Idee ist eine Synchronisationsschaltung, die durch eine Teilersteuerung eine dynamische Konfiguration der Teilerfaktoren bei Überschreiten des in der Vergleichsschaltung erzeugten Korrekturterms über einen vorgegebenen ersten Schwellwert bewirkt. Auf diese Weise wird eine kontinuierliche Abweichung des lokalen Taktes von dem globalen Takt durch eine einmalige Änderung der Teilerfaktoren berücksichtigt, und eine mehrfache Nachführung zum Ausgleich der festgestellten Abweichung des lokalen Taktes wird überflüssig.

Um die Änderung der Teilerfaktoren zu bewirken, wird ein Korrekturterm gebildet. Bei Überschreiten des Korrekturterms über den vorgegebenen ersten Schwellwert liefert die Steuereinheit an einen in der Teilersteuerung enthaltenen Teilerfaktorengenerator ein Steuersignal. Daraufhin führt der Teilerfaktorengenerator eine Teileranpassung durch.

Falls der Korrekturterm nicht nur den ersten sondern auch einen zweiten Schwellwert, der größer als der erste ist, überschreitet, wird eine Kalibrierung der Teilerfaktoren in der Kalibrierungseinheit durchgeführt. Damit ist es möglich, auch große Abweichungen des lokalen Taktes, wie sie z.B. nach Betriebspausen von Teilen des Kommunikationssystems auftreten können, dauerhaft zu korrigieren.

Anhand einiger Ausführungsbeispiele soll die Erfindung in Verbindung mit den Figuren näher erläutert werden. Es zeigen:
- Fig. 1: ein Kommunikationsnetzwerk mit mehreren Netzwerkknoten,
- Fig. 2: eine Synchronisationsschaltung eines Netzwerkknotens,
- Fig.3: eine Teileranordnung und eine Teilersteuerung einer Synchronisationsschaltung,
- Fig.4: eine Vorteileranordnung und eine Zähleranordnung einer Teileranordnung und
- Fig. 5 bis 7: eine Signaldarstellung der in dem Kommunikationssystem auftretender Takte.

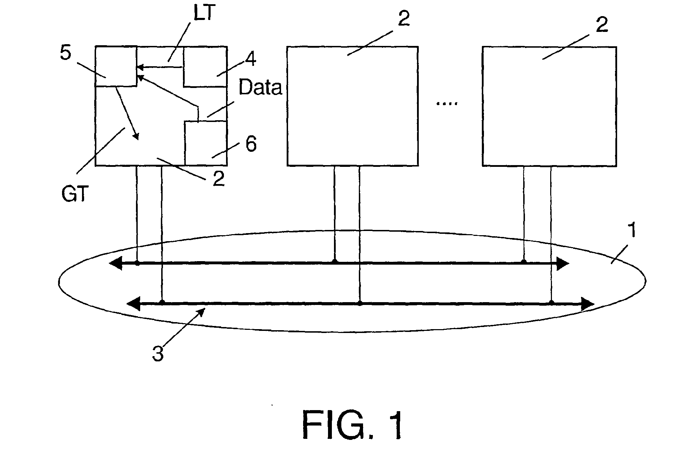

Ein Ausführungsbeispiel des erfindungsgemäßen Kommunikationsnetzwerks 1 ist in Fig. 1 dargestellt. Dieses Kommunikationsnetzwerk 1 kann z.B. ein aus der Zeitschrift "Elektronik", Nr. 14, 1999, Seite 36 bis 43 (Dr. Stefan Polenda, Georg Kroiss: "TTP: "Drive by Wire" in greifbarer Nähe") bekanntes TTP-Protokoll verwenden und besteht aus mehreren Netzwerkknoten 2, deren Zugriff auf ein gemeinsames Kommunikationsmedium 3, durch ein TDMA-Verfahren (Time Division Multiple Access) geregelt wird. Das Verfahren gewährleistet, dass immer nur ein Netzknoten 2 zu einer vorbestimmten Zeit eine Nachricht versenden darf. Ein zeitgesteuertes Protokoll wie das TTP-Protokoll benutzt in jedem Netzwerkknoten 2 einen lokalen Takt LT, der in einem Taktgenerator 4 des Netzwerkknotens 2 erzeugt wird. Der lokale Takt LT wird mit anderen Knoten zu einer globalen Übereinstimmung, einem globalen Takt GT, in einer Synchronisationsschaltung 5 synchronisiert. Zur Synchronisation liefert ein Dekodierer 6 dem Taktgenerator 4, der Synchronisationsschaltung 5 die für den Knoten aus dem Kommunikationsmedium 3 bestimmten Daten.

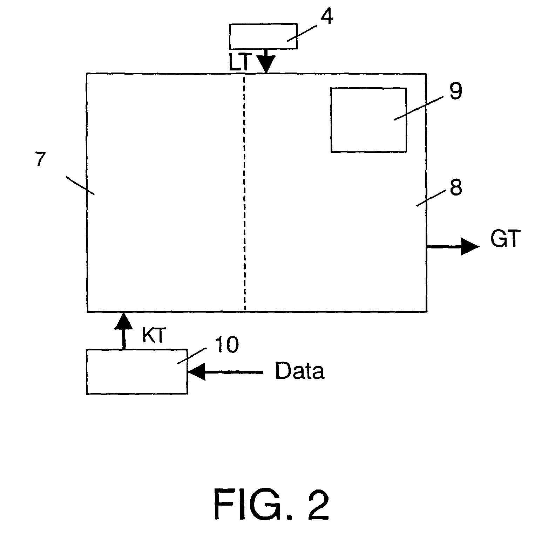

Die Synchronisationsschaltung 5 wird in Fig. 2 näher beschrieben. Sie erhält den lokalen Takt LT und einen Korrekturterm KT, um in einer Teilersteuerung 7 und einer Teileranordnung 8 mit einer Vorteileranordnung 9 das lokale Taktsignal LT zu modifizieren und dadurch den nächsten Puls für den globalen Takt GT zu verzögern oder vorzuziehen. Der Korrekturterm KT entsteht in einer Vergleichsschaltung 10 und ergibt sich aus dem Vergleich des theoretischen Zeitpunktes, zu dem eine bestimmte Nachricht (Data) eintreffen soll, mit dem tatsächlichen Empfangszeitpunkt dieser Nachricht (Data) (vgl. Zeitschrift "Elektronik", Nr. 14, 1999, Seite 36 bis 43, Dr. Stefan Polenda, Georg Kroiss: "TTP: "Drive by Wire" in greifbarer Nähe").

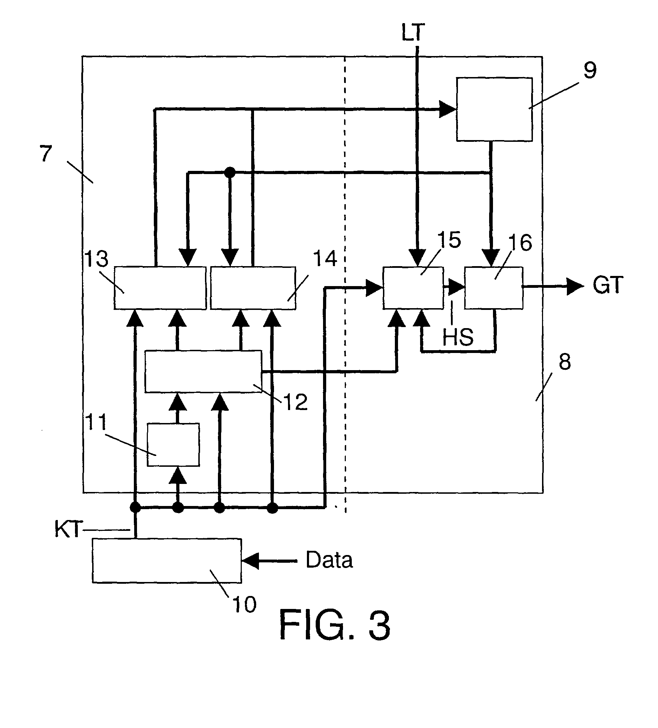

Fig. 3 zeigt ein Ausführungsbeispiel der Teilersteuerung 7 und der Teileranordnung 8. Die Teilersteuerung 7 enthält eine Schaltung zur Schwellwertbildung 11, deren Eingang mit der Vergleichsschaltung 10 und deren Ausgang mit einer Steuereinheit 12 verbunden sind. Die Steuereinheit 12 kann Steuersignale zu einem Teilerfaktorengenerator 13, einer Kalibrierungseinheit 14 oder einer Modifikationsvorrichtung 15 schicken. Dem Teilerfaktorengenerator 13 und der Kalibrierungseinheit 14 wird von der Vergleichsschaltung der Korrekturterm KT und von dem Vorteileranordnung 9 zwei Teilerfaktoren geliefert.

Sowohl der Teilerfaktorengenerator 13 als auch die Kalibrierungseinheit 14 können Daten an die Vorteileranordnung 9 senden. Diese befindet sich zusammen mit der Modifikationsvorrichtung 15 und einer Zähleranordnung 16 in der Teileranordnung 8 und schickt jeweils die aktuellen Teilerfaktoren an die Zähleranordnung 16, die nicht nur den globalen Takt GT zur Verfügung stellt, sondern auch ein Steuersignal zur Modifizierung an die Modifikationsvorrichtung 15 liefert. Diese hat eine Verbindung zur Vergleichsschaltung 10 und den Taktgenerator 4 des Netzwerkknotens. Der Ausgang der Modifikationsvorrichtung 15 führt zur der Zähleranordnung 16.

In Synchronisationsintervallen wird die Abweichung des lokalen Taktsignals LT von dem globalen Taktsignal GT in der Vergleichsschaltung 10 anhand des Korrekturterms KT festgestellt. Falls der Korrekturterm KT einen vorgegebenen ersten Schwellwert in der Schaltung zur Schwellwertbildung 11 unterschreitet, sendet die Steuereinheit 12 ein Steuersignal an die Modifikationsvorrichtung 15. In der Modifikationsvorrichtung 15 findet eine Modifikation des lokalen Takts LT in Abhängigkeit des Korrekturterms KT statt. Ein sich aus der Modifikationsvorrichtung 15 ergebenes Hilfssignal HS wird durch eine Zähleranordnung 16 heruntergeteilt. Überschreitet der festgestellte Korrekturterm KT den vorgegebenen ersten Schwellwert, dann sendet die Steuereinheit 12 ein Steuersignal an einen Teilerfaktorengenerator 13, der eine Veränderung der Teilerfaktoren in einer Vorteileranordnung 9 in Abhängigkeit des Korrekturterms KT bewirkt. Falls dieser Korrekturterm auch einen zweiten Schwellwert, der größer als der erste ist, überschreitet, sendet die Steuereinheit 12 ein Steuersignal an die Kalibrierungseinheit 14. Die Kalibrierungseinheit 14 bestimmt in Abhängigkeit vom Korrekturterm KT neue Werte der Teilerfaktoren für die Vorteileranordnung 9.

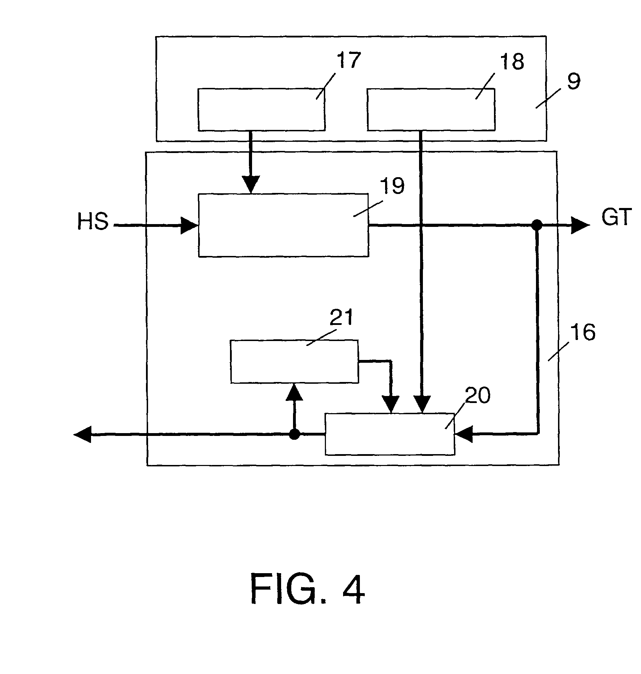

Um für den lokalen Taktgenerator keine Einschränkung bezüglich der Grundfrequenz vorzuschreiben, verfügt die in Fig. 4 dargestellte Vorteileranordnung 9 über einen ganzzahligen Vorteilerfaktor 17 und zusätzlich über einen nicht ganzzahligen Vorteilerfaktor 18. Ein Verfahren zur Handhabung nicht ganzzahliger Vorteilerfaktoren ist aus der Veröffentlichung "A Synchronization Strategy for a Time-Triggered Multicluster Real-Time System" (Hermann Kopetz, Andreas Krüger, Dietmar Millinger, Anton Schedl; Proc. of the 14^{th} IEEE Symposium on Reliable Distributed Systems, Bad Neuenahr, Germany, IEEE Press, Sep. 1995) bekannt. Ein Zähler 19, ein Addierer 20 und ein Akkumulatorregister 21 bilden die Zähleranordnung 16. Der Ausgang des ganzzahligen Vorteilerfaktors 17 führt zu dem Zähler 19 und der Ausgang des nicht ganzzahligen Vorteilerfaktor 18 zu dem Addierer 20. Der Addierer 20 schickt seine Daten nicht nur zur Modifikationsvorrichtung 15 sondern auch zu einem Akkumulatorregister 21, das wiederum sein Ergebnis dem Addierer 20 übermittelt. Zusammen bilden der Addierer 20 und das Akkumulatorregister 21 einen Akkumulator. In der Zähleranordnung 16 wird der Zähler 19 mit dem Wert des ganzzahligen Vorteilerfaktors initialisiert. Dieser Zähler 19 reduziert seinen Inhalt beim Empfang eines Pulses des Hilfssignals HS aus der Modifikationsvorrichtung 15. Wenn der Zähler den Wert Null erreicht hat, erzeugt er den globalen Takt GT. Gleichzeitig wird der nicht ganzzahlige Vorteiler durch den Addierer 20 in dem Akkumulatorregister 21 summiert, bis seine Summe den Überlaufwert (Wert 1) erreicht. In diesem Moment signalisiert der Addierer 20 der Modifikationsvorrichtung 15 einen Puls des lokalen Taktes LT zu unterdrücken. Auf diese Weise wird die Taktung des Zählers 19 und somit auch des globalen Taktes GT verzögert.

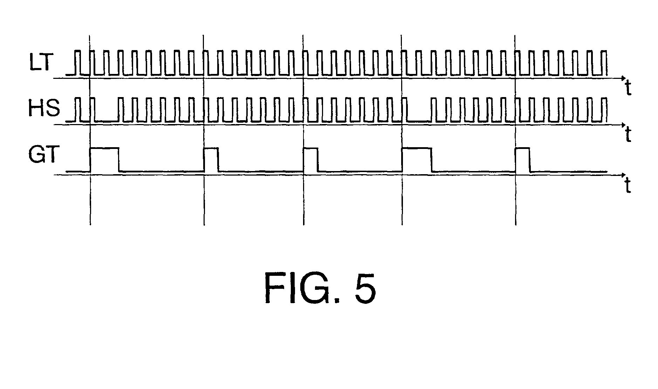

Fig. 5 zeigt den lokalen Takt LT, das modifizierte Hilfssignal HS und den globalen Takt GT. Diese Darstellung verdeutlicht die Abhängigkeit zwischen dem globalen Takt GT und dem lokalen Takt LT eines Netzwerkknotens. Der Einfluss der Teilerfaktoren ist hier anhand einer Beispielkonfiguration dargestellt. Der ganzzahlige Vorteiler ist zu 8 gewählt worden, wobei der nicht ganzzahlige Vorteiler auf 1/3 gesetzt wurde. Jede dritte Periode eines globalen Takts wird um eine Taktperiode eines lokalen Takts verlängert. Dazu wird aus dem lokalen Takt zum entsprechenden Zeitpunkt ein Puls ausgeblendet. Das modifizierte Hilfssignal HS dient als Zählertakt, um den globalen Takt GT zu generieren.

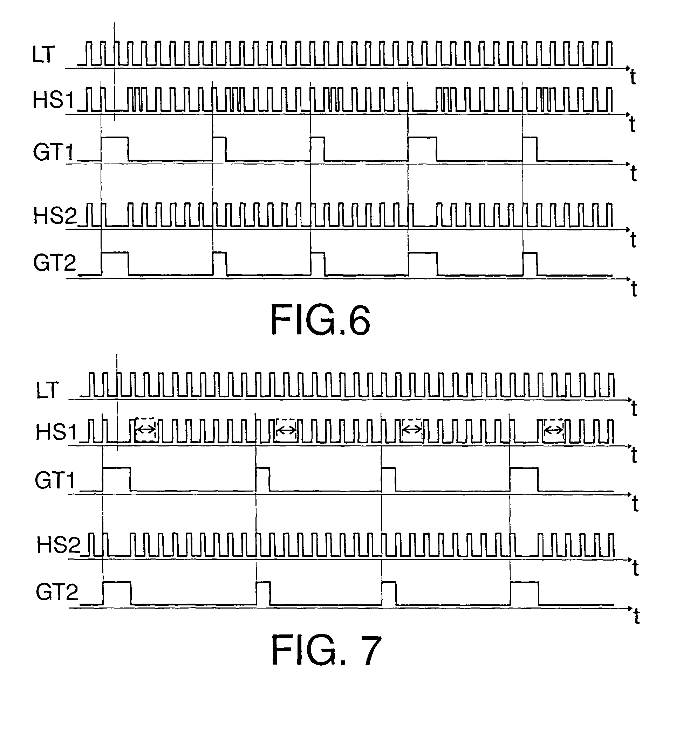

Fig. 6 und Fig. 7 zeigen beispielhaft für einen gegebenen lokalen Takt LT jeweils das in herkömmlicher Synchronisation erzeugte globale Taktsignal GT1 mit Hilfssignal HS1 sowie das mithilfe der dynamischen Konfiguration der Teilerfaktoren erzeugte globale Taktsignal GT2 mit Hilfssignal HS2. Fig. 6 beschreibt dabei den Fall der Taktbeschleunigung, während Fig. 7 den Fall der Taktverzögerung darstellt. Man erkennt deutlich in beiden Fällen die Identität der globalen Takte GT1 und GT2, während die Hilfssignale zum einen die Korrektur nach herkömmlichem Verfahren (HS1) und die erfindungsgemäße, dynamische Teilerfaktorenkorrektur (HS2) darstellen. Am Beispiel der Taktbeschleunigung soll der Vorgang weiter verdeutlicht werden: Während das Signal HS1 in jedem globalen Takt GT1 einen zusätzlichen Puls aufweist, um die acht Pulse in einem verkürzten Zeitraum zu erzeugen, genügen bei HS2 durch die veränderten Teilerfaktoren sieben Pulse, um den Beginn einer neuen globalen Taktperiode anzuzeigen.

## Patentansprüche

1. Kommunikationsnetzwerk (1)
- mit mehreren Netzwerkknoten (2), die jeweils mit einer Synchronisationsschaltung (5) zur Erzeugung eines globalen Taktsignals aus einem von einem in dem Netzwerkknoten vorgesehenen Taktgenerator (4) gebildeten lokalen Taktsignals LT in Abhängigkeit von einem Empfangszeitpunkt einer Nachricht,
- mit einer in jeder Synchronisationsschaltung (5) vorgesehenen Teileranordnung (8) zur Teilung des lokalen Taktsignals LT in Abhängigkeit von mindestens einem Teilerfaktor, den eine in der Synchronisationsschaltung (5) vorgesehene Vorteileranordnung (9) liefert, und einem Korrekturterm KT, und
- mit einer in jeder Synchronisationsschaltung (5) vorgesehenen Vergleichsschaltung (10) zur Bildung des Korrekturterms KT durch Vergleich des Empfangszeitpunkts einer Nachricht und des lokalen Taktsignals LT,
**dadurch gekennzeichnet,**
**dass** die Synchronisationsschaltungen (5) jeweils eine Teilersteuerung (7) enthalten, die zur Veränderung des Teilerfaktors oder wenigstens eines der Teilerfaktoren bei Überschreiten des Korrekturterms KT über einen vorgegebenen ersten Schwellwert vorgesehen ist.

2. Kommunikationsnetzwerk nach Anspruch 1,
**dadurch gekennzeichnet,**
**dass** die Teilersteuerungen (7) jeweils eine Steuereinheit (12) enthalten, welche zur Lieferung eines Steuersignals an einen in der Teilersteuerung (7) enthaltenen Teilerfaktorengenerator (13) bei Überschreiten des Korrekturterms KT über den vorgegebenen ersten Schwellwert vorgesehen ist, und dass der Teilerfaktorengenerator (13) bei Vorliegen des Steuersignals zur Änderung des Teilerfaktors oder wenigstens eines der Teilerfaktoren vorgesehen ist.

3. Kommunikationsnetzwerk nach Anspruch 2,
**dadurch gekennzeichnet,**
**dass** die Synchronisationsschaltung jeweils eine Kalibrierungseinheit (14) enthalten, die zur Kalibrierung des Teilerfaktors oder wenigstens eines der Teilerfaktoren bei Überschreiten des Korrekturterms KT über einen vorgegebenen zweiten Schwellwert, der größer als der erste Schwellwert ist, vorgesehen ist.

## Claims

1. A communication network (1) comprising
- a plurality of network nodes (2), which include each a synchronization circuit (5) for generating a global clock signal from a local clock signal LT formed by a clock generator (4) included in the network node in dependence on a time of reception of a message,
- a divider arrangement (8) included in each synchronization circuit (5), for dividing the local clock signal LT in dependence on at least one divider factor produced by a scaler arrangement (9) included in the synchronization circuit (5), and a correction term KT, and
- a comparator circuit (10) included in the synchronization circuit (5) for forming the correction term KT by comparing the time of reception of a message and of the local clock signal LT,
**characterized in that** the synchronization circuits (5) each include a divider control (7), which is provided for changing the divider factor or at least one of the divider factors when the correction term KT exceeds a predefined first threshold.

2. A communication network as claimed in claim 1,
**characterized in that** the divider controls (7) include each a control unit (12) which is provided for applying a control signal to a divider factor generator (13) included in the divider control (7) when the correction term KT exceeds the predefined first threshold and **in that** the divider factor generator (13) is provided for changing the divider factor or at least one of the divider factors when the control signal occurs.

3. A communication network as claimed in claim 2,
**characterized in that** the synchronization circuit includes a calibration unit (14) which is provided for calibrating the divider factor or at least one of the divider factors when the correction term KT exceeds a predefined second threshold, which is larger than the first threshold.

## Revendications

1. Réseau de communication (1)
- avec plusieurs noeuds de réseau (2) qui comportent chacun une commutation de synchronisation (5) pour produire un signal global de temporisation à partir d'un signal local de temporisation LT formé par un générateur de temporisation (4) prévu dans le noeud de réseau, en fonction d'un instant de temps de réception d'une information,
- avec un dispositif de séparateur (8) prévu dans chaque commutation de synchronisation (5) pour la division du signal local de temporisation LT en fonction d'au moins un facteur de division qui fournit un agencement de pré-diviseur (9) prévu dans la commutation de synchronisation (5), et un terme de correction KT, et
- avec une commutation de comparaison (10) prévue dans chaque commutation de synchronisation (5) pour former le terme de correction KT par comparaison de l'instant de réception d'une information et du signal local de temporisation LT,
**caractérisé en ce que**
les commutations de synchronisation (5) contiennent chacune une commande de diviseur (7) qui dispose d'une première valeur-seuil prédéterminée, pour modifier le facteur de diviseur ou au moins l'un des facteurs de diviseur en cas de dépassement du terme de correction KT.

2. Réseau de communication selon la revendication 1,
**caractérisé en ce que**
les commandes de diviseur (7) contiennent chacune une unité de commande (12) qui est prévue pour délivrer un signal de commande sur l'un des générateurs de facteurs de diviseur (13) contenus dans la commande de diviseur (7) lors du dépassement du terme de correction KT au-dessus de la première valeur-seuil prédéterminée, et **en ce que** le générateur de facteur de diviseur (13) est prévu pour modifier le facteur de diviseur ou au moins de l'un des facteurs de diviseur en cas de présence du signal de commande.

3. Réseau de communication selon la revendication 2,
**caractérisé en ce que**
la commutation de synchronisation contient respectivement une unité de calibration (14) qui est prévue pour calibrer le facteur de diviseur ou au moins l'un des facteurs de diviseur en cas de dépassement du terme de correction KT au-dessus d'une seconde valeur-seuil prédéterminée qui est supérieure à la première valeur-seuil.
